# EUROPÄISCHE PATENTANMELDUNG

(11) **EP 2 608 374 A1**
(43) Veröffentlichungstag der Anmeldung: **26.06.2013**
(21) Anmeldenummer: 11194191.0
(22) Anmeldetag: 19.12.2011
(51) Int. Cl.: H02M 1/32

(54) **Modularer Stromrichter**

(71) Anmelder: Siemens Aktiengesellschaft, 80333 München (DE)
(72) Erfinder: Adam, Alexander, 91284 Neuhaus (DE)

(57) **Zusammenfassung**

Die Erfindung betrifft eine Stromrichterschaltung (4), die wenigstens zwei Submodule (22) in Reihenschaltung umfasst, die über eine Induktivität (20) elektrische Leistung aus einer eine Gleichspannung (18) abgebenden Leistungsquelle (8) bezieht. Dabei weist jedes Submodul (22) eingangsseitig eine einphasige Halbbrücke (40) und lastseitig eine einphasige Vollbrücke (42) aufweist, wobei die Halbbrücke (40) und die Vollbrücke (42) gleichspannungsseitig sowie parallel hierzu ein Zwischenkreiskondensator (44) geschaltet sind. Die angegebene Stromrichterschaltung weist eine erste elektrische Schnittstelle (84) zum lösbaren elektrischen und mechanischen Verbinden des ersten Submoduls (22) mit der Reihenschaltung und eine zweite Schnittstelle (84) zum lösbaren elektrischen und mechanischen Verbinden des zweiten Submoduls (22) mit der Reihenschaltung auf.

## Beschreibung

Die Erfindung betrifft eine Stromrichterschaltung gemäß dem Oberbegriff des Anspruchs 1, einen Elektromotor und ein Fahrzeug.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, die die Submodule der Stromrichterschaltung der eingangs genannten Art als austauschbare Leistungselektronik-Komponenten auszuführen.

Der Vorschlag geht von der Überlegung aus, dass die Stromrichterschaltung der eingangs genannten Art als Schaltung ausgebildet werden könnte, in der alle Submodule auf einer gemeinsamen Leiterplatte verschaltet sind. Der Erfindung liegt demgegenüber die Erkenntnis zugrunde, dass auf einer derartigen Leiterplatte der Ausfall eines bestimmten Submoduls auf der Leiterplatte zu einem Ausfall der gesamten Stromrichterschaltung führen könnte dessen Reparatur sehr aufwändig wäre. Auf der einen Seite könnten die einzelnen Submodule auf der Leiterplatte nur sehr schwer zugänglich sein. Andererseits wäre der Austausch defekter Bauelemente, wie beispielsweise die Leistungshalbleiter schwierig. Zudem besteht eine nicht zu unterschätzende Gefahr eines Stromschlages, wenn der Zwischenkreiskondensator des zu reparierenden Submoduls noch geladen ist und dieser während der Reparatur berührt wird.

Zur Vermeidung dieser Nachteile schlägt die Erfindung eine Dekomposition der einzelnen Submodule vor, so dass jedes einzelne Submodul in der Stromrichterschaltung wie eine Zündkerze im Fahrzeug ausgetauscht werden kann. Auf diese Weise braucht zur Wartung und zur Reparatur jedes einzelnen Submoduls lediglich das betreffende Submodul durch Austausch eines anderen Submoduls ersetzt werden.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf, wobei die Halbbrücke und die Vollbrücke gleichspannungsseitig sowie parallel hierzu ein Zwischenkreiskondensator geschaltet sind. Die angegebene Stromrichterschaltung umfasst eine erste elektrische Schnittstelle zum lösbaren elektrischen und mechanischen Verbinden des ersten Submoduls mit der Reihenschaltung und eine zweite Schnittstelle zum lösbaren elektrischen und mechanischen Verbinden des zweiten Submoduls mit der Reihenschaltung.

Die Schnittstellen erlauben es, die einzelnen Submodule der Stromrichterschaltung austauschbar zu verschalten. Im Falle eines Fehlers ist so ein einfacher Austausch möglich, der prinzipiell durch jedermann und nicht nur durch einen ausgebildeten Servicemechaniker durchgeführt werden kann. Ferner kann durch eine geeignete Isolierung des Submoduls der Austausch gesichert werden, so dass ein elektrischer Stromschlag an einem eventuell noch aufgeladenen Zwischenkreiskondensator nahezu ausgeschlossen ist. Zudem lassen sich die dekompositionierten Submodule in beliebigen Lagen in einem Gehäuse anordnen, so dass die angegebene Stromrichterschaltung optimal an vorgebbare Bauraumanforderungen angepasst werden kann. Demgegenüber wäre eine Leiterplatte hinsichtlich einer geometrisch freien Dimensionierung gewissen Einschränkungen unterworfen. Ferner lassen sich die einzelnen Submodule als vorgefertigte Standardmodule kostengünstig in Serienproduktion vorfertigen und verschalten.

In einer Weiterbildung der Erfindung umfasst die angegebene Stromrichterschaltung eine Vorrichtung zum Bestimmen einer Einsatzdauer wenigstens eines der Submodule und zum Ausgeben eines Warnhinweises, wenn die Einsatzdauer einen vorbestimmten Wert überschreitet. Durch diese Überwachung der Einsatzdauer kann die Lebensdauer des betreffenden Submoduls überwacht werden, um beispielsweise altersbedingten Ausfallerscheinungen der Stromrichterschaltung durch einen rechtzeitigen Austausch vorbeugen zu können, wenn beispielsweise der Warnhinweis ausgegeben wird.

In einer anderen Weiterbildung der Erfindung umfasst die angegebene Vorrichtung eine Vorrichtung zum Erfassen eines Fehlers in wenigstens einem der Submodule und zum Ausgeben eines Warnhinweises basierend auf der Erfassung des Fehlers. Basierend auf dem Warnhinweis wird ein Anwender von der Notwendigkeit des Austausches informiert und kann gegebenenfalls vor Ort einen Austausch des Submoduls selbst durchführen, ohne einen ausgebildeten Servicetechniker hinzuziehen zu müssen. Auf diese Weise spart sich der Anwender nicht nur Zeit und Geld, das Vertrauen in das Produkt wird auch gefördert, da er die Fehlfunktion für den Anwender verständlich ist.

In einer besonderen Weiterbildung der Erfindung ist die Vorrichtung zum Erfassen des Fehlers vorgesehen, wenn eine Spannung am Zwischenkreiskondensator des betreffenden Submoduls von einem vorbestimmten Wertebereich abweicht. Durch die am Zwischenkreiskondensator abfallende Spannung lässt sich auf direkte Weise erkennen, ob der Leistungsfluss zwischen Eingang und Ausgang des bestimmten Submoduls beispielsweise durch einen Fehler gestört ist. Ist die Spannung am Zwischenkreiskondensator des bestimmten Submoduls zu hoch, könnte dies an einer Unterbrechung im bestimmten Submodul oder in einer an das bestimmte Submodul angeschlossenen elektrischen Last, wie der Motorwicklung, liegen, so dass zu wenig in das bestimmte Submodul eingespeiste Leistung an die elektrische Last abgegeben wird. Daher muss ein großer Teil der entsprechenden Energie im Zwischenkreiskondensator des bestimmten Submoduls gespeichert werden, was zu der entsprechend hohen Spannung führt. Eine zu niedrige Spannung am Zwischenkreiskondensator des bestimmten Submoduls könnte ein Hinweis auf einen Kurzschluss sein. Durch den vorgegeben Spannungsbereich für die Spannung am Zwischenkreiskondensator des bestimmten Submoduls ist damit ein Kriterium zum unmittelbaren Überwachen des bestimmten Submoduls auf Fehler hin geschaffen, auf die durch das Entladen des Zwischenkreiskondensators des bestimmten Submoduls rasch reagiert werden kann.

In einer anderen Weiterbildung der Erfindung ist die Vorrichtung zum Erfassen des Fehlers zum eingangsseitigen Kurzschließen des betreffenden Submoduls basierend auf der Erfassung des Fehlers vorgesehen. Durch das eingangsseitige Kurzschließen des fehlerhaften Submoduls kann ein Leistungsfluss in der Stromrichterschaltung der eingangs genannten Art an dem fehlerhaften Submodul vorbeigeleitet werden, so dass ein Ausfall des fehlerhaften Submoduls nicht zwangsläufig zu einem Ausfall der gesamten Stromrichterschaltung führt. Ist beispielsweise in einem Fahrzeug, dessen Räder über einen Elektromotor mit der Stromrichterschaltung angetrieben werden, der Zugang zu den einzelnen Submodulen verbaut, so kann das Fahrzeug beispielsweise in einem Notprogramm, in dem eines der Submodule eingangsseitig kurzgeschlossen ist, noch bis zu einer geeigneten Werkstatt gefahren werden, um den Zugang zum defekten Submodul freizulegen.

In einer bevorzugten Weiterbildung der Erfindung ist die Vorrichtung zum Erfassen des Fehlers zum Ansteuern der Halbleiterbrücke der fehlerfreien Submodule derart vorgesehen ist, dass nach dem eingangsseitigen Kurzschluss des fehlerhaften Submoduls die Spannungen an den Zwischenkreiskondensatoren konstant bleiben. Auf diese Weise kann verhindert werden, dass die verbleibenden funktionsfähigen Submodule in der Stromrichterschaltung durch eine erhöhte Eingangsspannung nach Ausfall des fehlerhaften Submoduls überbelastet werden.

In einer besonders bevorzugten Weiterbildung ist die Vorrichtung zum Entladen des Zwischenkreiskondensators des betreffenden Submoduls basierend auf der Erfassung des Fehlers vorgesehen. Die Entladung kann über eine eigene Entladeschaltung, über eine angeschlossene Last oder durch Rückspeisen der elektrischen Energie in die angeschlossene elektrische Leistungsquelle erfolgen. Auf diese Weise wird zusätzliche Sicherheit geschaffen. Ist beispielsweise der Zwischenkreiskondensator bewusst oder durch einen Unfall freigelegt, so können Stromschläge an dem freigelegten Zwischenkreiskondensator wirksam vermieden werden.

In einer alternativen Weiterbildung der Erfindung umfasst die angegeben Stromrichterschaltung ein zum ersten und zweiten Submodul baugleiches Hilfsmodul, wobei die Vorrichtung zum Erfassen des Fehlers zum Ersetzen des Submoduls mit dem erfassten Fehler durch das Hilfsmodul vorgesehen ist. Auf diese Weise kann die Stromrichterschaltung unter Normalbedingungen weiterbetrieben werden, ohne besonderen betrieblichen Einschränkungen unterworfen zu sein. Der Austausch des defekten Submoduls kann dann zu jedem beliebigen Zeitpunkt erfolgen. Die angegebene Weiterbildung lässt sich auch auf den Fall übertragen, dass ein bestimmtes Submodul seine voraussichtliche Lebensdauer überschritten hat, und ein Ausfall dieses Submoduls sehr wahrscheinlich ist.

Die Erfindung gibt auch einen Elektromotor an, der Motorwicklungen zum Antreiben eines Rotors und eine angegebene Stromrichterschaltung zur elektrischen Energieversorgung der Motorwicklungen umfasst.

Die Erfindung gibt auch ein Fahrzeug an, das einen angegebenen Elektromotor zu seinem Antrieb umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit den Zeichnungen näher erläutert werden, wobei:
- FIG 1: eine Schaltung mit einer beispielhaften Stromrichterschaltung,
- FIG 2: ein Submodul der Stromrichterschaltung der FIG 1,
- FIG 3: eine schematische Darstellung eines Antriebssystems mit der Stromrichterschaltung der FIG 1, und
- FIG 4: eine perspektivische Ansicht eines Elektromotors mit der Stromrichterschaltung der FIG 1 zeigen.

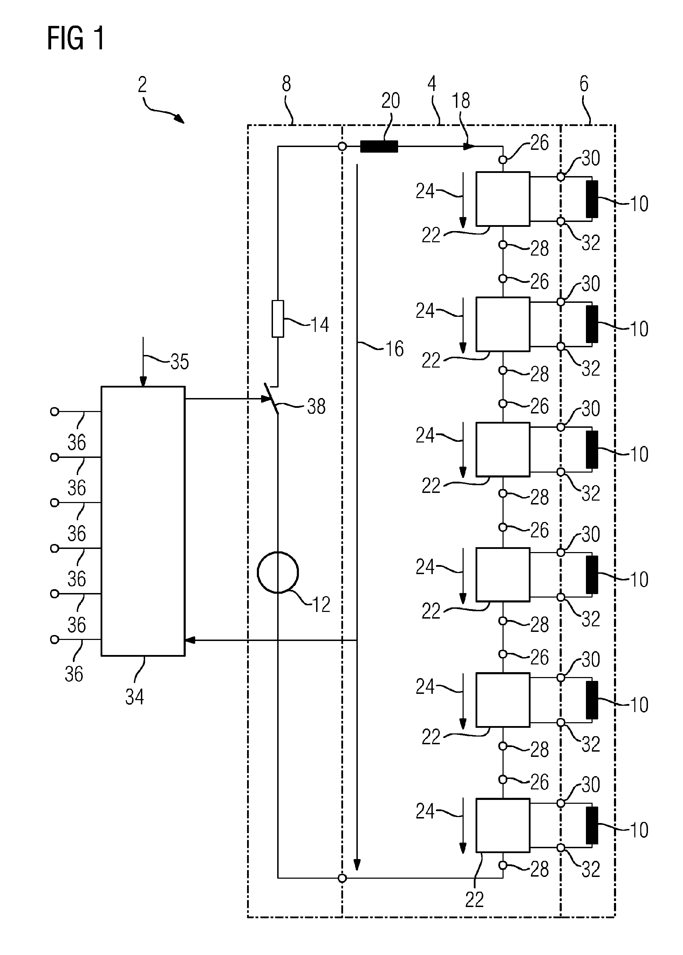

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

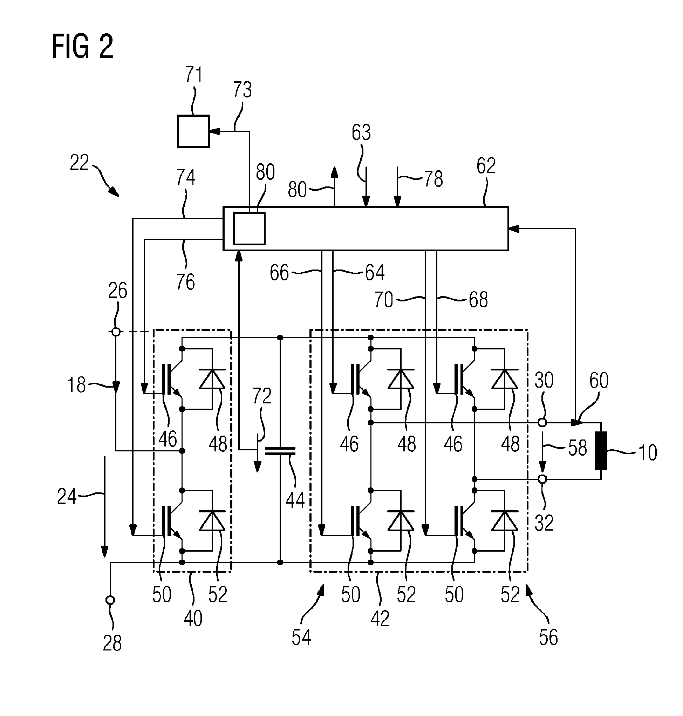

Die Schaltung 2 besitzt ferner ein übergeordnetes Steuergerät, nachstehend Master 34 genannt, das die Erzeugung des Drehfeldes mit den als Motorwicklungen ausgebildeten elektrischen Lasten 10 des als Elektromotor ausgebildeten elektrischen Verbrauchers 6 steuert. Dazu kann der Master 34 eine Drehzahl 35 des als Elektromotor ausgebildeten elektrischen Verbrauchers 6 empfangen und basierend auf Stellsignalen 36 die einzelnen Submodule 22 ansteuern. Basierend auf den Stellsignalen 36 stellen die einzelnen Submodule 22 einen in FIG 2 gezeigten elektrischen Strom 60 durch die als Motorwicklungen ausgebildeten elektrischen Lasten 10 ein, um das Drehfeld zu erzeugen.

Der Master 34 ist ferner vorgesehen, die Batteriespannung 16 zu erfassen. Anhand der Batteriespannung 16 überprüft der Master 34 die Schaltung 2 auf Fehler hin. Ist die Batteriespannung 16 beispielsweise zu gering, ist dies ein Anzeichen für einen Kurzschluss. Im Fehlerfalle überführt der Master 34 die Schaltung 2 in einen sicheren Zustand, indem er einen Schalter 38 öffnet, der beispielsweise intern in der Batterie 8 angeordnet sein kann.

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 40, eine Vollbrücke 42 und einen Zwischenkreiskondensator 44 auf, die miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu parallel geschaltete zweite Freilaufdiode 52 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen dem zweiten Schalter 50 und dem Wechselrichter 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 42 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Teilspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 realisiert einen Vierquadrantensteller, der eine erste Wechselrichterhalbbrücke 54 und eine zweite Wechselrichterhalbbrücke 56 aufweist. Beide Wechselrichterhalbbrücken 54, 56 sind analog zur Eingangshalbbrücke 40 aufgebaut. Die hochgesetzte Teilspannung 24, die über den Zwischenkreiskondensator 44 geglättet wird, kann durch eine geeignete Ansteuerung der Vollbrücke 42 in eine Wechselspannung 58 umgewandelt werden. Die Wechselspannung 58 wird an die elektrische Last 10 angelegt und ruft einen entsprechenden Wechselstrom 60 durch die elektrische Last 10 hervor. Gibt die elektrische Last 10 elektrische Energie an die als Vierquadrantensteller ausgeführte Vollbrücke 42 ab, so kann diese den entsprechenden Leistungsfluss zurück in das Submodul 22 leiten.

Zur Ansteuerung der Vollbrücke 42 ist im Submodul 22 ein lokales Steuergerät, nachstehend Slave 62 genannt, vorgesehen. Der Slave 62 empfängt vom Master 34 über eine nicht gezeigte sichere elektrische Trennung das Stellsignal 36. Basierend auf dem Stellsignal 36 leitet der Slave 62 ein erstes Ansteuersignal 64 für den ersten Schalter 46 der ersten Wechselrichterhalbbrücke 54, ein zweites Ansteuersignal 66 für den zweiten Schalter 50 der ersten Wechselrichterhalbbrücke 54, ein drittes Ansteuersignal 68 für den ersten Schalter 46 der zweiten Wechselrichterhalbbrücke 56 und ein viertes Ansteuersignal 70 für den zweiten Schalter 50 der zweiten Wechselrichterhalbbrücke 56 ab, so dass die Wechselrichterhalbbrücken 54, 56 den Batteriestrom 18 zerhacken und als Wechselstrom 60 durch die elektrische Last 10 so einstellen, das er bestimmten Vorgaben folgt, die dem Slave im Stellsignal 36 mitgeteilt werden. Die Erzeugung der Ansteuersignale 64 bis 70 kann dabei durch eine offene Steuerung oder basierend auf einer Messung des Wechselstromes 60 durch eine geschlossene Regelung erfolgen.

Der Slave 62 kann ferner anhand einer am Zwischenkreiskondensator 44 abfallenden Spannung 72 einen Fehler im Submodul 22 erfassen. Der Zwischenkreiskondensator 44 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Zwischenkreiskondensatorspannung 72 begrenzt ist. Überschreitet diese einen bestimmten Wert, so ist dies demnach ein Hinweis auf einen fehlerhaften elektrischen Energiefluss durch das Submodul 22, da der Zwischenkreiskondensator 44 nun nicht mehr ausschließlich elektrische Energie aus dem Blindleistungsfluss sondern auch aus einem Wirkleistungsfluss speichert, was darauf hindeutet, dass eventuell eine Unterbrechung im Submodul vorliegen könnte. Unterschreitet die Zwischenkreiskondensatorspannung 72 hingegen einen weiteren kleineren vorbestimmten Wert, so ist dies ein Hinweis auf einen Kurzschluss zum Zwischenkreiskondensator 44. Der Auftritt eines Fehlers kann beispielsweise durch eine Signalleuchte 71 angezeigt werden, die über eine Fehlersignal 73 durch den Slave 62 angezeigt wird. Auf diese Weise kann dem Anwender oder einem Servicepersonal ein gezielter Hinweis gegeben werden, in welchem Submodul 22 ein Fehler aufgetreten ist. Dies erleichtert die Fehlersuche.

In beiden Fällen kann der Slave 44 mit einem fünften Ansteuersignal 74 den zweiten Schalter 50 dauerhaft schließen, so den Eingang der Eingangshalbbrücke 40 kurzschließen und das Submodul 22 so aus dem Leistungskreis der Stromrichterschaltung 4 entfernen, ohne, dass die restlichen Submodule 22 davon betroffen wären.

Alternativ oder zusätzlich kann der Kurschluss auch über den ersten Schalter 46 der Eingangshalbbrücke 40 und einer der beiden Wechselrichterhalbbrücken 54, 56 erreicht werden, wobei der erste Schalter 46 vom Slave durch ein sechstes Ansteuersignal 76 angesteuert wird. Dieser alternative Kurzschluss sollte jedoch erst geschalten werden, nachdem der Zwischenkreiskondensator 44 wie nachstehend erläutert entladen wurde.

Zum Entladen des Zwischenkreiskondensators 44 legt der Slave 62 die Zwischenkreiskondensatorspannung 72 mittelbar oder unmittelbar an die elektrische Last 10 an. Durch unmittelbares Anlegen der Zwischenkreiskondensatorspannung 72 an die elektrische Last 10 wird der Zwischenkreiskondensator 44 sofort entladen, da die als Motorwicklung ausgeführte elektrische Last 10 für die Gleichspannung 72 des Zwischenkreiskondensators 44 wie ein Kurzschluss wirkt.

Die Entladung des Zwischenkreiskondensators 44 im Submodul 22 kann auch durch den Master 34 über eine Anweisung 78 initiiert werden, beispielsweise, wenn die Stromrichterschaltung 4 abgestellt werden soll.

Der Slave 62 weist ferner einen internen Zähler 80 auf, der vorgesehen ist, ab einem vorgegebenen Zeitpunkt eine verstrichene Zeitdauer zu zählen. Der vorgegebene Zeitpunkt kann beispielsweise die erste Inbetriebnahme des Submoduls sein, so dass aus dem Submodul die Betriebsdauer ableitbar ist. Überschreitet die Betriebsdauer eine zu erwartende Lebensdauer so kann dies ebenfalls über die Signalleuchte 71 angezeigt werden.

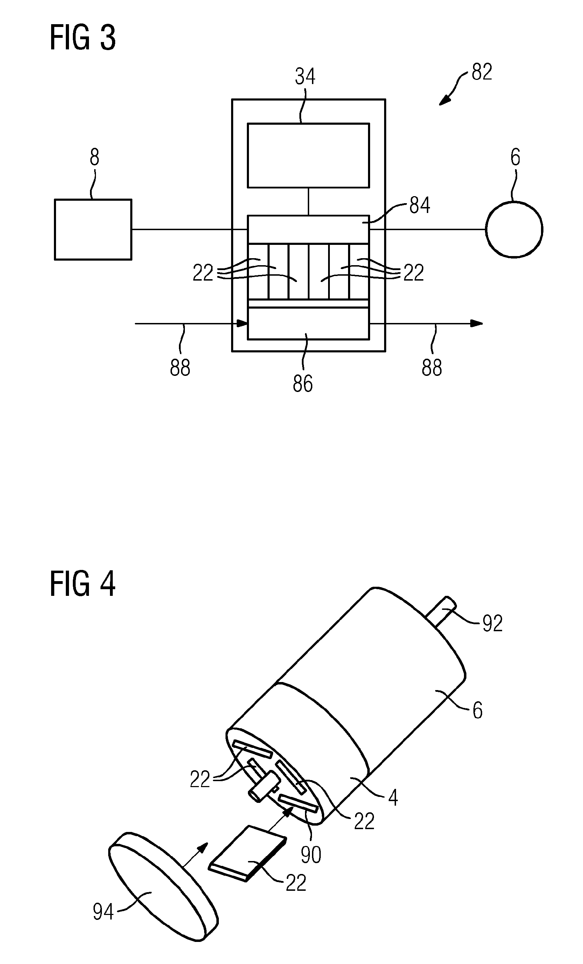

Es wird auf FIG 3 Bezug genommen, die eine schematische Darstellung eines Antriebssystems 82 mit der Stromrichterschaltung der FIG 1 zeigt. In FIG 3 werden zu FIG 1 und 2 gleiche Elemente mit gleichen Bezugszeichen versehen und nicht noch einmal beschrieben.

In FIG 3 sind die einzelnen Submodule auf einer Leistungsschiene 84 mechanisch befestigt. Auf der Leistungsschiene 84 befinden sich in nicht gezeigter Weise auch die Eingänge 26, 28 und die Ausgänge 30, 32. Die Eingänge 26, 28 als auch die Ausgänge 30, 32 auf der Leistungsschiene 84 stellen damit verschiedene Schnittstellen dar, mit der die einzelnen Submodule 84 zwischen der Batterie 8 und dem als Elektromotor ausgebildeten elektrischen Verbraucher 6 lösbar verschaltet werden können.

Neben der Leistungsschiene 84 umfasst das Antriebssystem 82 auch eine Kühlung 86 für die Submodule, die von einem Kühlmittel 88 durchflossen werden kann.

Es wird auf FIG 4 Bezug genommen, die eine perspektivische Ansicht des als Elektromotor ausgebildeten elektrischen Verbrauchers 4 mit der Stromrichterschaltung 4 der FIG 1 zeigt. In FIG 4 werden zu den FIG 1 bis 3 gleiche Elemente mit gleichen Bezugszeichen versehen und nicht noch einmal beschrieben.

Wie in FIG 4 gezeigt, können die einzelnen Submodule 22 in vorgefertigten Taschen 90 aufgenommen werden, die sich axial zu einer Motorwelle 92 erstrecken. Am zum Elektromotor 6 hin gerichteten Ende der Taschen 90 kann in nicht gezeigter Weise die Leistungsschiene 84 der Stromrichterschaltung 4 ausgebildet sein. Durch Einschieben der Submodule 22 in die Taschen 90 werden diese dann mit der Leistungsschiene elektrisch kontaktiert.

Mechanisch können die Submodule 22 durch einen Deckel 94 in den Taschen 90 gehalten werden.

Ist eines der Submodule 22 defekt oder zu alt, was beispielsweise durch die Signalleuchte 71 angezeigt wird, kann ein Anwender einfach das betreffende Submodul 22 aus seiner Tasche entfernen und durch ein entsprechend anderes Submodul 22 ersetzen.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität (20) elektrische Leistung aus einer eine Gleichspannung (18) abgebenden Leistungsquelle (8) bezieht, wobei jedes Submodul (22) eingangsseitig eine einphasige Halbbrücke (40) und lastseitig eine einphasige Vollbrücke (42) aufweist, und wobei die Halbbrücke (40) und die Vollbrücke (42) gleichspannungsseitig sowie parallel hierzu ein Zwischenkreiskondensator (44) geschaltet sind, **gekennzeichnet durch** eine erste elektrische Schnittstelle (84) zum lösbaren elektrischen und mechanischen Verbinden des ersten Submoduls (22) mit der Reihenschaltung und eine zweite Schnittstelle (84) zum lösbaren elektrischen und mechanischen Verbinden des zweiten Submoduls (22) mit der Reihenschaltung.

2. Stromrichterschaltung nach Anspruch 1, **gekennzeichnet durch** eine Vorrichtung (62) zum Bestimmen einer Einsatzdauer wenigstens eines der Submodule (22) und zum Ausgeben eines Warnhinweises (73), wenn die Einsatzdauer einen vorbestimmten Wert überschreitet.

3. Stromrichterschaltung nach Anspruch 1 oder 2, **gekennzeichnet durch** eine Vorrichtung (62) zum Erfassen eines Fehlers in wenigstens einem der Submodule (22) und zum Ausgeben eines Warnhinweises (73) basierend auf der Erfassung des Fehlers.

4. Stromrichterschaltung nach Anspruch 3, wobei die Vorrichtung (62) zum Erfassen des Fehlers vorgesehen ist, wenn eine Spannung (72) am Zwischenkreiskondensator (44) des betreffenden Submoduls (22) von einem vorbestimmten Wertebereich abweicht.

5. Stromrichterschaltung nach Anspruch 3 oder 4, wobei die Vorrichtung (62) zum Erfassen des Fehlers zum eingangsseitigen Kurzschließen des betreffenden Submoduls (22) basierend auf der Erfassung des Fehlers vorgesehen ist.

6. Stromrichterschaltung nach Anspruch 5, wobei die Vorrichtung (62) nach dem eingangsseitigen Kurzschließen des betreffenden Submoduls (22) zum Ansteuern der Halbleiterbrücke (40) der fehlerfreien Submodule (22) derart vorgesehen ist, dass nach dem eingangsseitigen Kurzschluss des fehlerhaften Submoduls (22) die Spannungen (72) an den Zwischenkreiskondensatoren (44) der fehlerfreien Submodule (22) konstant bleiben.

7. Stromrichterschaltung nach einem der Ansprüche 3 bis 6, **dadurch gekennzeichnet , dass** die Vorrichtung (62) zum Erfassen des Fehlers zum Entladen des Zwischenkreiskondensators (44) des betreffenden Submoduls (22) basierend auf der Erfassung des Fehlers vorgesehen ist.

8. Stromrichterschaltung nach einem der Ansprüche 3 bis 7, **gekennzeichnet durch** ein zum ersten und zweiten Submodul (22) baugleiches Hilfsmodul, wobei die Vorrichtung (62) zum Erfassen des Fehlers zum Ersetzen des Submoduls (22) mit dem erfassten Fehler **durch** das Hilfsmodul vorgesehen ist.

9. Elektromotor umfassend Motorwicklungen (10) zum Antreiben eines Rotors (92) und eine Stromrichterschaltung (4) nach einem der Ansprüche 1 bis 8 zur elektrischen Energieversorgung der Motorwicklungen (10).

10. Fahrzeug umfassend einen Elektromotor nach Anspruch 9 zu seinem Antrieb.
